# EUROPÄISCHE PATENTSCHRIFT

(11) **EP 1 282 144 B1**
(45) Veröffentlichungstag und Bekanntmachung des Hinweises auf die Patenterteilung: **18.10.2006**
(21) Anmeldenummer: 02017364.7
(22) Anmeldetag: 02.08.2002
(51) Int. Cl.: H01H 13/70, G02B 1/10, G06F 3/02, G06F 3/023

(54) **Eingabe- und/oder Anzeigevorrichtung**
Input and/or display device
Dispositif d'entrée et/ou d'affichage

(30) Priorität: 02.08.2001 DE 10137460; 02.08.2001 DE 20112652 U
(43) Veröffentlichungstag der Anmeldung: 05.02.2003
(73) Patentinhaber: Richard Wöhr GmbH, 75339 Höfen/Enz (DE)
(72) Erfinder: Wöhr, Stefan, 75339 Höfen/Enz (DE); Wöhr, Jürgen, 75339 Höfen/Enz (DE)
(74) Vertreter: Leitner, Waldemar

(56) Entgegenhaltungen:
- WO-A-96/04123
- DE-A- 19 709 165
- DE-A- 19 847 844
- DE-A- 19 857 317
- DE-U- 29 919 018
- US-A- 5 773 126
- US-A- 6 008 940

## Beschreibung

Die Erfindung betrifft eine Eingabevorrichtung mit mindestens einem Eingabeelement, wobei das mindestens eine Eingabeelement eine Nano-Beschichtung an zumindest einem durch äußere Einflüsse beaufschlagbaren Teil der Oberfläche der Eingabevorrichtung aufweist.

Solche Eingabevorrichtungen sind z. B. aus der DE 299 19 018 U1 bekannt, in der eine Eingabevorrichtung mit den Merkmalen des Oberbegriffs des Anspruchs 1 beschrieben ist. Derartige Eingabevorrichtungen finden Anwendung beispielsweise bei Ausgabeautomaten, Bedieneinrichtungen von Maschinen, Tastaturen für elektrische und elektronische Geräte, Mobiltelephone und dergleichen mehr.

Sie weisen jeweils mindestens ein Eingabeelement auf. Über das mindestens eine Eingabeelement sind Informationen oder Befehle eingebbar.

Ein Nachteil der bekannten Vorrichtungen ist, daß die Eingabeelemente, welche in der Regel von einem Bediener von Hand betätigt werden, und welche dadurch einer Beaufschlagung ihrer Oberfläche ausgesetzt sind, leicht verkratzt oder verschmutzt werden können. Bei einem Einsatz der Eingabevorrichtung im Freien oder in einer Werkhalle ist die Oberfläche der Vorrichtung Witterungseinflüssen und/oder aggressiven Gasen oder Dämpfen ausgesetzt, welche die Oberfläche angreifen oder in das Innere der Eingabevorrichtung eindringen können. Wenn die Eingabeelemente zum Schutz vor Umgebungseinflüssen unter einer flexiblen, transparenten und/oder bedruckten Folie angeordnet sind, so ist die Folie durch Druckbeaufschlagung bei der Bedienung oder durch Umwelteinflüsse leicht beschädigbar oder verschmutzbar. Eine verkratzte oder verschmutzte Folie behindert aber die optische Wahrnehmung eines unter ihr angeordneten Eingabeelements und/oder einer Kennzeichnung des vorgenannten Elements oder sonstiger Bestandteile der Vorrichtung

Die US-A-5 773 126 offenbart einen Film, der als Oberflächenfilm für unterschiedliche Anzeigeeinheiten, wie z. B. CRT-, LCD- und Plasma-Anzeigeeinheiten, als ein Schutzfilm für optische Linsen, wie z. B. transparente Kunststoffe, Sonnengläser, optische Linsen für Brillen und Sucherlinsen für Kameras und für verschiedene Instrumente und Meßeinrichtungen oder auch als eine Antireflex-Beschichtung für Fenstergläser von Automobilen, Eisenbahnen und dergleichen sowie als Schutzfilm für die Oberfläche von Rückseiten von LCD-Anzeigeeinheiten verwendbar ist.

Die DE 198 47 844 A offenbart einen polymeren, teilkristallinen thermoplastischen Werkstoff mit nanoskaligen Nukleierungsmitteln, sowie daraus hergestellte hochtransparente Formteile.

Die US-A-6 008 940 offenbart eine Folie mit Nano-Partikeln für einen Polarisationsfilter.

Es ist daher Aufgabe der vorliegenden Erfindung, eine bekannte Eingabevorrichtung derart weiterzubilden, daß die Oberfläche unempfindlicher ist.

Eingabevorrichtung mit mindestens einem Eingabeelement, wobei das mindestens eine Eingabeelement eine Nano-Beschichtung an zumindest einem durch äußere Einflüsse beaufschagbarem Teil einer Oberfläche der Eingabevorrichtung aufweist, dadurch gekennzeichnet, dass das Eingabeelement unter einer Folie angeordnet ist, welche eine Nano-Beschichtung an zumindest dem durch die äußeren Einflüsse beaufschlagbaren Teil der Oberfläche der Eingabevorrichtung aufweist, wobei die Dicke der Nano-Beschichtung maximal 50 µm beträgt, und wobei die Nano-Beschichtung Partikel mit einer durchschnittlichen Partikelgröße von kleiner als 10 µm, vorzugsweiser kleiner als 1 µm, aufweist.

Eine an einem Teil ihrer Oberfläche mit einer nanoskalige Partikel aufweisenden Nano-Beschichtung versehene Eingabevorrichtung zeichnet sich dadurch aus, daß durch ein entsprechendes Aufbringen einer Nano-Beschichtung in vorteilhafter Art und Weise eine Eingabevorrichtung herstellbar ist, welche schmutz-, staub- und/oder wasserabweisend ist und/oder welche beständig gegen Säuren, Laugen und/oder andere schädigende Chemikalien ist.

Eine vorteilhafte Weiterbildung der Erfindung sieht vor, daß mindestens ein Eingabeelement die Nano-Beschichtung aufweist. Die Eingabeelemente der Eingabevorrichtung werden besonders häufig beaufschlagt, insbesondere durch einen Benutzer, welcher beispielsweise mit den Fingern auf die Eingabeelemente drückt. Dadurch sind diese besonders Verschleiß und/oder Verschmutzung ausgesetzt, was zu einer besonders raschen Abnutzung bzw. einem unansehnlichen Aussehen führen kann, besonders wenn sie dadurch überdies mit an den Fingern des Benutzers klebenden Substanzen beaufschlagt werden. Indem zumindest ein Eingabeelement die Nano-Beschichtung aufweist, ist das beschichtete Element in vorteilhafter Art und Weise gegen die oben genannten Einflüsse geschützt.

Eine weitere vorteilhafte Weiterbildung sieht vor, daß mindestens ein Eingabeelement unter einer Folie angeordnet ist, welche die Nano-Beschichtung aufweist. Diese Maßnahme besitzt den Vorteil, daß das Eingabeelement unter der Folie durch diese bereits beispielsweise vor Umwelteinflüssen wie Feuchtigkeit geschützt ist, während die Folie durch die Nano-Beschichtung beispielsweise abrieb-, kratz- und verschleißfest sowie chemikalienresistent und schmutzabweisend ausgebildet sein kann.

Weiter vorteilhafte Weiterbildungen der Erfindung sind Gegenstand der Unteransprüche.

Weitere Einzelheiten und Vorteile der Erfindung sind dem Ausführungsbeispiel zu entnehmen, das im folgenden anhand der Figur beschrieben wird. Es zeigt:

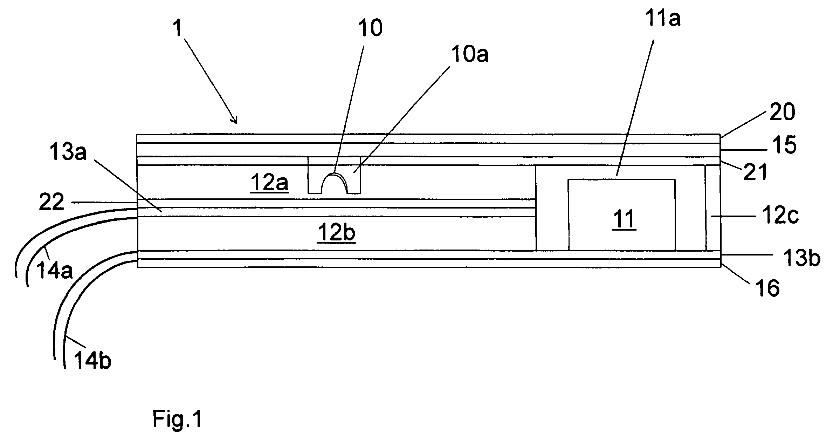

- Figur 1: ein Ausführungsbeispiel einer erfindungsgemäßen Eingabe- und Anzeigevorrichtung im Schnitt.

In Figur 1 ist im Schnitt eine Ausführungsform einer Eingabe- und Anzeigevorrichtung 1 gezeigt, welche ein als Folientastatur ausgebildetes Eingabeelement 10 und ein Anzeigeelement 11 aufweist. Die Eingabe- und Anzeigevorrichtung 1 ist schichtartig aufgebaut, wobei das Eingabeelement 10 in einer Ausnehmung 10a und das Anzeigeelement 11 in einer Ausnehmung 11a aufgenommen ist. An der dem Benutzer zugewandten Seite sind das Eingabeelement 10 und das Anzeigeelement 11 durch eine Deckschicht 15, vorzugsweise eine transparente und/oder bedruckte, insbesondere eine hinterdruckte Folie, bedeckt. Abstandsschichten 12a, 12b, 12c dienen einem Höhenausgleich zwischen unterschiedlich hohen Bauteilen der Eingabe- und Anzeigevorrichtung 1, welche an der dem Benutzer abgewandten Seite eine weitere Deckschicht 16 aufweist.

Die Deckschicht 15 ist an ihrer dem Eingabeelement 10 und dem Anzeigeelement 11 abgewandten und damit Umwelteinflüssen ausgesetzten Oberfläche mit einer Nano-Beschichtung 20 beschichtet, welche im wesentlichen die gesamte Oberfläche der Deckschicht 15 bedeckt, die eine Dicke von maximal 50 µm, vorzugsweise maximal 25 µm aufweist, und welche nanoskalige Partikel, d. h. Partikel mit einer durchschnittlichen Partikelgröße von maximal 10 µm, vorzugsweise maximal 1 µm, wobei Partikelgrößen von maximal 400 nm, insbesondere von maximal 50 nm und hierbei insbesondere von maximal 30 nm bevorzugt werden, aufweist.

Die Nano-Beschichtung 20 ist aus nanoskaligen Partikeln aufgebaut, welche Verbindungen mit einem anorganischen Grundgerüst, in diesem Fall Verbindungen von Silizium mit dem anorganischen Grundgerüst, aufweisen. Alternativ oder ergänzend zu den Siliziumverbindungen können jedoch auch Verbindungen von Aluminium, Silicaten, Titan, Zirkon oder Verbindungen mit fluoridhaltigen Gruppen zur Anwendung kommen. Die nanoskaligen Partikel sind miteinander vernetzt, so daß sie ein als Netzwerk ausgebildetes anorganisches Grundgerüst bilden. In diesem Netzwerk sind organische Komponenten, insbesondere organische Silizium-Verbindungen, enthalten. Abhängig von ihrer chemischen Zusammensetzung weist die Nano-Beschichtung 20 spezifische Eigenschaften auf. Dabei ist es dem Fachmann bekannt, welche Zusammensetzung er wählen muß, um die Nano-Beschichtung 20 schmutzabweisend und/oder staubabweisend und/oder wasserabweisend und/oder elektrisch leitfähig und/oder beständig gegen Säuren und/oder Laugen und/oder andere aggressive Chemikalien auszubilden. Es ist ihm ferner bekannt, welche Zusammensetzung er wählen muß, um die Nano-Beschichtung 20 chemisch inert und/oder korrosionsbeständig und/oder umweltfreundlich und/oder lebensmittelecht und/oder abriebfest und/oder kratzfest und/oder verschleißfest auszubilden.

Im hier gezeigten Ausführungsbeispiel ist die Nano-Beschichtung 20 schmutzabweisend ausgebildet. Dadurch wird eine Anlagerung von Schmutz- und Staubpartikeln auf der Deckschicht 15 der Eingabe- und Anzeigevorrichtung 1, welche unter anderem die Hygiene bzw. das Aussehen der Eingabe- und Anzeigevorrichtung 1 und bei starker Verschmutzung sogar die Sichtbarkeit des Eingabeelements 10 und/oder des Anzeigeelements 11 beeinträchtigen könnte, verhindert. Dies ist vor allem für den Teil der Deckschicht 15 der Eingabe- und Anzeigevorrichtung 1 relevant, unter dem das Eingabeelement 10 angeordnet ist, und der von einer Bedienperson bei der Betätigung des Eingabeelements 10 mit den Fingem beaufschlagt und dadurch leicht beschmutzt wird.

Des weiteren ist die Nano-Beschichtung 20 im hier beschriebenen Fall - zusätzlich zu ihrer schmutzabweisenden Ausbildung - elektrisch leitend ausgebildet, so daß durch sie die Eingabe- und Anzeigevorrichtung 1 vor auf deren Oberfläche einfallender elektromagnetischer Strahlung abgeschirmt ist. Die elektrisch leitende Ausbildung der Nano-Beschichtung 20 besitzt des weiteren den Vorteil, daß hierdurch auch die Umgebung der Eingabe- und Anzeigevorrichtung 1 von durch diese emittierten Strahlungen geschützt wird. Insbesondere bei einem weiter unten näher beschriebenen Einbau der Eingabe- und Anzeigevorrichtung 1 in ein Gehäuse mit einer elektrisch leitenden Oberfläche werden elektrische Komponenten der Eingabe- und Anzeigevorrichtung 1 gegen die Funktionsweise der Komponenten störende elektromagnetische Strahlung abgeschirmt, indem die elektrisch leitende Nano-Beschichtung 20 mit der elektrisch leitenden Oberfläche des Gehäuses elektrisch leitend verbunden wird, wodurch ein Faradayscher Käfig entsteht.

Vorzugsweise weist die Eingabe- und Anzeigevorrichtung 1 elektrisch leitende Schichten 21, 22 auf, welche, ebenso wie die elektrisch leitende Nano-Beschichtung 20, elektrische Komponenten der Eingabe- und Anzeigevorrichtung 1, insbesondere elektrische Kontaktschichten 13a, 13b, welche das Eingabeelement 10 bzw. das Anzeigeelement 11 mit an eine in Figur 1 nicht gezeigte Auswerteeinrichtung angeschlossenen Kabeln 14a, 14b verbinden, vor elektromagnetischer Strahlung abschirmen. Die erste elektrisch leitende Schicht 21 ist an der dem Benutzer abgewandten Seite der Deckschicht 15 angeordnet. Die zweite elektrisch leitende Schicht 22 ist an der der Deckschicht 15 zugewandten Seite der Kontaktschicht 13a angeordnet. Hierbei müssen nicht beide elektrisch leitenden Schichten 21, 22 gleichzeitig in der Eingabe- und Anzeigevorrichtung 1 vorgesehen sein. Es ist völlig ausreichend, eine der elektrisch leitenden Schichten 21, 22 vorzusehen. Die elektrisch leitenden Schichten 21, 22 weisen dabei vorzugsweise, was jedoch nicht zwingend erforderlich ist, jeweils eine Nano-Beschichtung auf.

Die Nano-Beschichtung 20 ist im hier gezeigten Ausführungsbeispiel farblos transparent, also optisch neutral ausgebildet. Es ist jedoch auch möglich, farbige Pigmentierungen in der Nano-Beschichtung 20 vorzusehen, wodurch die mit der Nano-Beschichtung 20 beschichtete Deckschicht 15 in der gewünschten Farbe eingefärbt ist.

Die im Ausführungsbeispiel beschriebene, mit der Nano-Beschichtung 20 versehene Oberfläche der Deckschicht 15 der Eingabe- und Anzeigevorrichtung 1 ist - wie oben ausgeführt- schmutzabweisend und/oder elektrisch leitend ausgebildet. Es kann jedoch auch vorgesehen sein, die Oberfläche der Deckschicht 15 der Eingabe- und Anzeigevorrichtung 1 alternativ oder ergänzend zu ihren schmutzabweisenden und elektrisch leitenden Eigenschaften abrieb-, kratz- und/oder verschleißfest auszubilden. Dies wird durch eine dem Fachmann bekannte Variation der Zusammensetzung der Nano-Beschichtung 20 erreicht und führt zu einer gegenüber herkömmlichen Eingabe- und Anzeigevorrichtungen verbesserten mechanischen Beanspruchbarkeit der mit der Nano-Beschichtung versehenen Deckschicht 15 der Eingabe- und Anzeigevorrichtung 1. Des weiteren ist es möglich, durch eine Variation der Zusammensetzung der Nano-Beschichtung 20 die Deckschicht der Eingabe- und Anzeigevorrichtung 1 alternativ oder ergänzend zu ihren schmutzabweisenden und elektrisch leitenden Eigenschaften resistent gegen Säuren, Laugen und andere aggressive Chemikalien oder gegen Luftfeuchtigkeit auszubilden. Dies bewirkt einen Schutz der Deckschicht 15, wenn die Eingabe- und Anzeigevorrichtung 1 einer solche Stoffe beinhaltenden Atmosphäre ausgesetzt ist. Dabei ist es möglich, die Nano-Beschichtung 20 und damit die der Bedienperson zugewandte Oberfläche der Deckschicht 15 chemisch inert, korrosionsbeständig, umweltfreundlich und/oder lebensmittelecht auszubilden.

Es versteht sich von selbst, daß die Anwendung einer Nano-Beschichtung 20 sich nicht auf Eingabe- und/oder Anzeigevorrichtungen gemäß dem gezeigten Ausführungsbeispiel beschränkt. Da eine Nano-Beschichtung 20 sich durch eine gute Haftfähigkeit auf Metallen, Kunststoffen, Keramik, Glas und mineralischen Materialien auszeichnet, ist sie somit auf verschiedensten Arten von Eingabe- und/oder Anzeigevorrichtungen auftragbar.

Insbesondere ist sie auch für Eingabe- und/oder Anzeigevorrichtungen 1 verwendbar, bei denen Eingabeelemente 10 bzw. Anzeigeelemente 11 nicht in einen schichtförmigen Aufbau integriert sind, sondern aus der Vorrichtung hervorstehen, wie Tastaturen mit herausstehenden Tasten. Dabei müssen die Eingabe- und/oder Anzeigeelemente nicht unter einer Deckschicht 15 angeordnet sein, sondern können direkt mit der Nano-Beschichtung versehen werden und dadurch, wie oben für die Deckschicht 15 beschrieben, schmutzabweisend und/oder elektrisch leitend und/oder mechanisch beständig und/oder chemisch widerstandsfähig ausgebildet sein.

Desweiteren ist es möglich, nicht, wie im Ausführungsbeispiel gezeigt, die gesamte Oberfläche einer Eingabe- und/oder Anzeigevorrichtung mit einer Nano-Beschichtung zu versehen, sondern nur definierteTeilbereiche dieser Oberfläche, wie z. B. die ein Eingabeelement oder ein Anzeigeelement bedeckende Oberfläche bzw. einzelne Eingabe- oder Anzeigeelemente. Dabei kann vorgesehen sein, die Nano-Beschichtung 20 an verschiedenen Bereichen der Oberfläche der Eingabe- und/oder Anzeigevorrichtung unterschiedlich auszubilden, so daß beispielsweise Eingabeelemente und Anzeigeelemente unterschiedlich farblich markiert werden bzw. gegen unterschiedliche äußere Einflüsse geschützt werden.

Die Eingabe- und Anzeigevorrichtung 1 ist in ein Gehäuse aus elektrisch nichtleitendem Material (in Figur 1 nicht gezeigt) eingebaut, welches vorzugsweise eine durch das Eingabeelement 10 beaufschlagbare elektrische oder elektronische Schalt-, Steuer- oder Auswertevorrichtung umschließt. Dabei ist vorgesehen, daß nicht nur Bereiche der Eingabe- und Anzeigevorrichtung 1, sondern zumindest auch Teile einer Oberfläche des die Eingabe- und Anzeigevorrichtung 1 aufweisenden Gehäuses mit einer Nano-Beschichtung versehen sind. Die Nano-Beschichtung des Gehäuses ist dabei ebenso wie die Nano-Beschichtung 20 der Eingabe- und Anzeigevorrichtung 1, insbesondere schmutzabweisend und elektrisch leitend, ausgebildet.

Die Nano-Beschichtung des Gehäuses kann aber auch so ausgebildet sein, daß sie Eigenschaften hat, welche unterschiedlich gegenüber den Eigenschaften der Nano-Beschichtung 20 der Eingabe- und Anzeigevorrichtung 1 sein können. So ist die Nano-Beschichtung 20 der Eingabe- und Anzeigevorrichtung 1 und damit deren Oberfläche schmutzabweisend und elektrisch leitend, während die Nano-Beschichtung des Gehäuses und damit dessen Oberfläche beispielsweise dagegen nur elektrisch leitend sein kann. Die Nano-Beschichtung des Gehäuses kann in diesem Fall an der dem Gehäuseinneren zugewandten Oberfläche des Gehäuses oder an der nach außen gewandten Oberfläche angebracht sein. Insbesondere dann, wenn die gesamte Oberfläche des Gehäuses mit einer elektrisch leitenden Nano-Beschichtung versehen ist, ist die von ihm umschlossene Schalt-, Steuer- oder Auswertevorrichtung durch die Nano-Beschichtung des Gehäuses im Zusammenwirken mit der mit ihr elektrisch leitend verbundenen elektrisch leitenden Nano-Beschichtung 20 der Eingabe- und Anzeigevorrichtung 1 gegen elektromagnetische Strahlung abgeschirmt bzw. die Umgebung der Eingabe- und Anzeigevorrichtung 1 von elektromagnetischer Strahlung, die von den vorgenannten Vorrichtungen emittiert werden, zumindest teilweise abgeschirmt.

Es kann jedoch auch vorgesehen sein, daß das Gehäuse, abweichend vom oben gesagten, aus Metall ausgebildet ist. Eine Umschließung der im Gehäuse angeordneten Schalt-, Steuer- oder Auswertevorrichtung durch einen Faradayschen Käfig und damit eine Abschirmung gegen elektromagnetische Strahlung ist in diesem Fall bereits dann gegeben, wenn das Gehäuse mit der elektrisch leitenden Nano-Beschichtung 20 der Eingabe- und Anzeigevorrichtung 1 elektrisch leitend verbunden ist. Es bedarf jedoch keiner weiteren Erwähnung, daß auch ein metallisches Gehäuse eine Nano-Beschichtung aufweisen kann.

Es kann auch vorgesehen sein, die als Folie ausgebildete Deckschicht 15 vor dem Zusammenbau der Eingabe- und Anzeigevorrichtung 1 mit der Nano-Beschichtung 20 zu versehen. Die beschichtete Folie 15 wird dann auf die Eingabe- und Anzeigevorrichtung 1 aufgebracht. Es versteht sich jedoch von selbst, daß sich die Anwendbarkeit einer mit einer Nano-Beschichtung versehenen Folie nicht auf das Aufbringen auf die Eingabe- und Anzeigevorrichtung 1 erschöpft.

Eine solche Folie kann ebenso auf eine Oberfläche eines eine Eingabe- und/oder Anzeigevorrichtung aufweisenden Gehäuses aufgebracht werden.

Anstelle der vorstehend beschriebenen Nano-Beschichtung kann auch ganz oder teilweise eine Nano-Strukturierung der entsprechenden Oberfläche verwendet werden oder hierzu nanostrukturiertes Material eingesetzt werden.

## Patentansprüche

1. Eingabevorrichtung (1) mit mindestens einem Eingabeelement (10), wobei das mindestens eine Eingabeelement (10) eine Nano-Beschichtung (20) an zumindest einem durch äußere Einflüsse beaufschagbarem Teil einer Oberfläche der Eingabevorrichtung (1) aufweist, **dadurch gekennzeichnet, dass** das Eingabeelement (10) unter einer Folie (15) angeordnet ist, welche die Nano-Beschichtung (20) an zumindest dem durch die äußeren Einflüsse beaufschlagbaren Teil der Oberfläche der Eingabevorrichtung (1) aufweist, wobei die Dicke der Nano-Beschichtung (20) maximal 50 µm beträgt, und wobei die Nano-Beschichtung (20) Partikel mit einer durchschnittlichen Partikelgröße von kleiner als 10 µm, vorzugsweiser kleiner als 1 µm, aufweist.

2. Eingabevorrichtung (1) nach Anspruch 1, **dadurch gekennzeichnet, daß** mindestens ein Eingabeelement (10) von der die Nano-Beschichtung (20) aufweisenden Folie (15) zumindest teilweise abgedeckt ist.

3. Eingabevorrichtung (1) nach Anspruch 2, **dadurch gekennzeichnet, daß** die Folie (15) transparent und/oder bedruckt ist.

4. Eingabevorrichtung (1) nach einem der vorangehenden Ansprüche, **dadurch gekennzeichnet, daß** die Folie (15) mindestens eine Lage (15, 16) aus schichtförmigem Material mit der Nano-Beschichtung (20) aufweist.

5. Eingabevorrichtung (1) nach einem der vorangehenden Ansprüche, **gekennzeichnet durch** mindestens eine elektrisch leitende Schicht (21, 22), welche so ausgebildet und angeordnet ist, daß sie elektrische Komponenten (13a, 13b) der Eingabevorrichtung (1) gegen elektromagnetische Strahlung abschirmt.

6. Eingabevorrichtung (1) nach Anspruch 5, **dadurch gekennzeichnet, daß** die oder mindestens eine der elektrisch leitenden Schichten (21, 22) die Nano-Beschichtung (20) aufweist.

7. Eingabevorrichtung (1) nach einem der vorangehenden Ansprüche, **dadurch gekennzeichnet, daß** die nanoskaligen Partikel Verbindungen mit einem anorganischen Grundgerüst aufweisen, insbesondere mit einem Grundgerüst, in welchem Aluminium und/oder Silizium und/oder Silicate und/oder Titan und/oder Zirkon und/oder fluorhaltige Gruppen enthalten sind.

8. Eingabevorrichtung (1) nach Anspruch 7, **dadurch gekennzeichnet, daß** durch das anorganische Grundgerüst ein Netzwerk von nanoskaligen Partikeln ausgebildet ist.

9. Eingabevorrichtung (1) nach Anspruch 8, **dadurch gekennzeichnet, daß** im Netzwerk organische Komponenten enthalten sind, insbesondere organische Silizium-Verbindungen.

10. Eingabevorrichtung (1) nach einem der vorangehenden Ansprüche, **dadurch gekennzeichnet, daß** die Nano-Beschichtung (20) eine Dicke von maximal 25 µm aufweist.

11. Eingabevorrichtung nach einem der vorangehenden Ansprüche, **dadurch gekennzeichnet, daß** die Nano-Beschichtung (20) farbige Pigmente aufweist.

12. Gehäuse, insbesondere für eine elektrische oder elektronische Schalt-, Steuer- oder Auswertevorrichtung, **gekennzeichnet durch** eine Eingabevorrichtung (1) nach einem der vorangehenden Ansprüche.

13. Gehäuse nach Anspruch 12, **gekennzeichnet durch** eine nanoskalige Partikel aufweisende Nano-Beschichtung (20) an mindestens einem Teil einer Oberfläche des Gehäuses.

14. Verwendung einer Folie zum Aufbringen auf eine Eingabevorrichtung nach einem der Ansprüche 1 bis 11 oder einem Gehäuse nach einem der Ansprüche 12 oder 13, **gekennzeichnet durch** eine nanoskalige Partikel aufweisende Nano-Beschichtung (20) an mindestens einem Teil einer Oberfläche der Folie (15), wobei die Dicke der Nano-Beschichtung (20) maximal 50 µm beträgt, und wobei die Nano-Beschichtung (20) Partikel mit einer durchschnittlichen Partikelgröße von kleiner als 10 µm, vorzugsweise kleiner als 1 µm aufweist.

15. Verfahren zur Beschichtung einer Eingabevorrichtung nach einem der Ansprüche 1 bis 11, wobei auf zumindest einen durch äußere Einflüsse beaufschlagbaren Teil einer Oberfläche der Eingabevorrichtung (1) eine nanoskalige Partikel aufweisende Nano-Beschichtung (20) aufgebracht wird, **dadurch gekennzeichnet, dass** die Nano-Beschichtung (20) auf eine Folie (15) aufgebracht wird, wobei die Dicke der Nano-Beschichtung (20) maximal 50 µm beträgt, und wobei die Nano-Beschichtung (20) Partikel mit einer durchschnittlichen Partikelgröße von kleiner als 10 µm, vorzugsweise kleiner als 1 µm aufweist.

## Claims

1. input device (1) with at least one input element (10), wherein the at least one input element (10) comprises a nano-coating (20) at at least one part of the surface of the input device (1) which is exposable to external influences, **characterized in that** the input element (10) is disposed under a foil (15), which comprises the nano-coating (20) at at least that part of the surface of the input device (1) which is exposable to external influences, whereby the maximum thickness of the nano-coating (20) is 50 µm, and whereby the nano-coating (20) comprises particles with an average particle size of smaller than 10 µm, preferably smaller than 1 µm.

2. Input device (1) according to claim 1, **characterized in that** at least one input element (10) is at least partially covered by the foil (15) comprising the nano-coating (20).

3. Input device (1) according to claim 2, **characterized in that** the foil (15) is transparent and/or printed.

4. Input device (1) according to one of the previous claims, **characterized in that** the foil (15) comprises at least one layer (15, 16) of layer-type material with the nano-coating (20).

5. Input device (1) according to one of the previous claims, **characterized by** at least one electrically conductive layer (21, 22), which is designed and disposed such that it shields electric components (13a, 13b) of the input device (1) against electromagnetic radiation.

6. Input device (1) according to claim 5, **characterized in that** the or at least one of the electrically conductive layers (21, 22) comprises the nano-coating (20).

7. Input device (1) according to one of the previous claims, **characterized in that** the nano-scaled particles comprise compounds with an anorganic matrix, in particular with a matrix, in which aluminium and/or silicon and/or silicate and/or titanium and/or circonium and/or fluoride containing groups are contained.

8. Input device (1) according to claim 7, **characterized in that** by the anorganic matrix a network of nano-scaled particles is formed.

9. Input device (1) according to claim 8, **characterized in that** organic components are contained in the network, in particular organic silicon compounds.

10. Input device (1) according to one of the previous claims, **characterized in that** the nano-coating (20) has a maximum thickness of 25 µm.

11. Input device (1) according to one of the previous claims, **characterized in that** the nano-coating (20) comprises coloured pigments.

12. Housing, in particular for an electric or electronic switching, controlling or evaluating device, **characterized by** an input device (1) according to one of the previous claims.

13. Housing according to claim 12, **characterized by** a nano-coating (20) at at least a part of a surface of the housing, the nano-coating (20) comprising nano-scaled particles.

14. Use of a foil for applying it to an input device according to one of the claims 1 to 11 or to a housing according to one of the claims 12 or 13, **characterized by** a nano-coating (20) at at least a part of a surface of the foil (15), the nano-coating (20) comprising nano-scaled particles, whereby the maximum thickness of the nano-coating (20) is 50 µm, and whereby the nano-coating (20) comprises particles with an average particle size of smaller than 10 µm, preferably smaller than 1 µm.

15. Method for coating an input device according to one of the claims 1 to 11, whereby a nano-coating (20) comprising nano-scaled particles is applied to at least a part of a surface of the input device (1) which is exposable to external influences, **characterized in that** the nano-coating (20) is applied to a foil (15), whereby the maximum thickness of the nano-coating (20) is 50 µm, and whereby the nano-coating (20) comprises particles with an average particle size of smaller than 10 µm, preferably smaller than 1 µm.

## Revendications

1. Dispositif d'entrée (1) avec au moins un élément d'entrée (10), le ou les éléments d'entrée (10) étant pourvus d'un nano-revêtement (20) sur au moins une partie exposée à des influences extérieures d'une surface du dispositif d'entrée (1), **caractérisé en ce que** l'élément d'entrée (10) est disposé sous un film (15) pourvu du nano-revêtement (20) sur au moins la partie exposée aux influences extérieures de la surface du dispositif d'entrée (1), l'épaisseur du nano-revêtement (20) étant de 50 µm au maximum, et le nano-revêtement (20) présentant des particules d'une grandeur moyenne inférieure à 10 µm, de préférence inférieure à 1 µm.

2. Dispositif d'entrée (1) selon la revendication 1, **caractérisé en ce qu'**au moins un élément d'entrée (10) est recouvert au moins partiellement par le film (15) pourvu du nano-revêtement (20).

3. Dispositif d'entrée (1) selon la revendication 2, **caractérisé en ce que** le film (15) est transparent et/ou imprimé.

4. Dispositif d'entrée (1) selon l'une des revendications précédentes, **caractérisé en ce que** le film (15) comporte au moins une couche (15, 16) de matière stratifiée avec le nano-revêtement (20).

5. Dispositif d'entrée (1) selon l'une des revendications précédentes, **caractérisé par** au moins une couche électriquement conductrice (21, 22), réalisée et disposée de manière à blinder des composants électriques (13a, 13b) du dispositif d'entrée (1) contre le rayonnement électromagnétique.

6. Dispositif d'entrée (1) selon la revendication 5, **caractérisé en ce que** la ou au moins une des couches électriquement conductrices (21, 22) est pourvue du nano-revêtement (20).

7. Dispositif d'entrée (1) selon l'une des revendications précédentes, **caractérisé en ce que** les particules nanométriques présentent des liaisons avec une structure de base inorganique, en particulier avec une structure de base contenant de l'aluminium et/ou du silicium et/ou du titane et/ou du zirconium et/ou des groupes fluorés.

8. Dispositif d'entrée (1) selon la revendication 7, **caractérisé en ce qu'**un réseau de particules nanométriques est formé par la structure de base inorganique.

9. Dispositif d'entrée (1) selon la revendication 8, **caractérisé en ce que** des composants organiques sont contenus dans le réseau, en particulier des composés organiques de silicium.

10. Dispositif d'entrée (1) selon l'une des revendications précédentes, **caractérisé en ce que** le nano-revêtement (20) présente une épaisseur maximale de 25 µm.

11. Dispositif d'entrée selon l'une des revendications précédentes, **caractérisé en ce que** le nano-revêtement (20) présente des pigments colorés.

12. Boîtier, en particulier pour un dispositif électrique ou électronique de commutation, de commande ou d'évaluation, **caractérisé par** un dispositif d'entrée (1) selon l'une des revendications précédentes.

13. Boîtier selon la revendication 12, **caractérisé par** un nano-revêtement (20) présentant des particules nanométriques sur au moins une partie d'une surface du boîtier.

14. Utilisation d'un film à appliquer sur un dispositif d'entrée selon l'une des revendications 1 à 11 ou un boîtier selon l'une des revendications 12 ou 13, **caractérisé par** un nano-revêtement (20) présentant des particules nanométriques sur au moins une partie d'une surface du film (15), l'épaisseur du nano-revêtement (20) étant de 50 µm au maximum, et le nano-revêtement (20) présentant des particules d'une grandeur moyenne inférieure à 10 µm, de préférence inférieure à 1 µm.

15. Procédé de revêtement d'un dispositif d'entrée selon l'une des revendications 1 à 11, un nano-revêtement (20) présentant des particules nanométriques étant appliqué sur au moins une partie exposée aux influences extérieures d'une surface du dispositif d'entrée (1), **caractérisé en ce que** le nano-revêtement (20) est appliqué sur un film (15), l'épaisseur du nano-revêtement (20) étant de 50 µm au maximum, et le nano-revêtement (20) présentant des particules d'une grandeur moyenne inférieure à 10 µm, de préférence inférieure à 1 µm.
